Europäisches Patentamt

European Patent Office

Office européen des brevets

(19)

(11) **EP 1 631 000 A1**

(12) **EUROPEAN PATENT APPLICATION**

(43) Date of publication:
   **01.03.2006 Bulletin 2006/09**

(51) Int Cl.:
   *H04L 12/18* (2006.01)

(21) Application number: **04020655.9**

(22) Date of filing: **31.08.2004**

(84) Designated Contracting States:
   **AT BE BG CH CY CZ DE DK EE ES FI FR GB GR
   HU IE IT LI LU MC NL PL PT RO SE SI SK TR**
   Designated Extension States:
   **AL HR LT LV MK**

(71) Applicant: **MATSUSHITA ELECTRIC INDUSTRIAL
   CO., LTD.
   Kadoma-shi, Osaka 571-8501 (JP)**

(72) Inventors:
   • **Rey, José Luis
      64287 Darmstadt (DE)**

   • **Rimac, Ivica
      64287 Darmstadt (DE)**
   • **Hakenberg, Rolf
      64295 Darmstadt (DE)**
   • **Becker, Ralf
      63263 Neu-Isenburg (DE)**
   • **Fukui, Akito
      Yokohama-shi, 224-8539 (JP)**

(74) Representative: **Grünecker, Kinkeldey,
   Stockmair & Schwanhäusser
   Anwaltssozietät
   Maximilianstrasse 58
   80538 München (DE)**

(54) **Deterministic feedback control for multicast or broadcast services**

(57)    The invention relates to a method for controlling the transmission of feedback of mobile terminals receiving via an air interface of a mobile communication system a multicast or broadcast service transmitted or forwarded by a feedback control entity and to a mobile terminal, the feedback control entity using this method. Further, a communication system comprising a feedback control entity and a mobile terminal receiving a multicast or broadcast service is provided. To enable configurable and adaptive feedback for multicast or broadcast services provided via an air interface maintaining the end-to-end session concept the invention suggests that a feedback control entity deterministically selects a subset of the mobile terminals of the mobile communication system and which receive the multicast or broadcast service for providing feedback to the feedback control entity. In one embodiment of the invention the terminals are instructed to start or stop feedback provision by the feedback control entity by means of signaling.

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|V=2|P|reserved |    PT=XR=207   |              length           |
+-+-+-+-+-+-+-+-+-+-+-+-+-+-+-+-+-+-+-+-+-+-+-+-+-+-+-+-+-+-+-+-+
|                             SSRC                              |
+-+-+-+-+-+-+-+-+-+-+-+-+-+-+-+-+-+-+-+-+-+-+-+-+-+-+-+-+-+-+-+-+
|     BT        |     rsvd      |          block length         |
+-+-+-+-+-+-+-+-+-+-+-+-+-+-+-+-+-+-+-+-+-+-+-+-+-+-+-+-+-+-+-+-+
|                         SSRC of source                        |
+-+-+-+-+-+-+-+-+-+-+-+-+-+-+-+-+-+-+-+-+-+-+-+-+-+-+-+-+-+-+-+-+
|O|M|  cnt/res  |            IMSI A                       ...
+-+-+-+-+-+-+-+-+-+-+-+-+-+-+-+-+-+-+-+-+-+-+-+-+-+-+-+-+-+-+-+-+
                                              |          ...
+-+-+-+-+-+-+-+-+-+-+-+-+-+-+-+-+-+-+-+-+-+-+-+-+-+-+-+-+-+-+-+-+
...                          IMSI B                       ...
+-+-+-+-+-+-+-+-+-+-+-+-+-+-+-+-+-+-+-+-+-+-+-+-+-+-+-+-+-+-+-+-+
...                        |                               ...
+-+-+-+-+-+-+-+-+-+-+-+-+-+-+-+-+-+-+-+-+-+-+-+-+-+-+-+-+-+-+-+-+
```

Fig. 9

EP 1 631 000 A1

**Description**

**FIELD OF THE INVENTION**

The invention relates to a method for controlling the transmission of feedback of mobile terminals receiving - via an air interface of a mobile communication system - a multicast or broadcast service transmitted or forwarded by a feedback control entity. Moreover a feedback control entity using this method is provided. Further, a communication system comprising a feedback control entity and a mobile terminal receiving a multicast or broadcast service is provided.

**TECHNICAL BACKGROUND**

The Real-time Transport Protocol (RTP) (see Schulzrinne et al., "RTP: A Transport Protocol for Real-Time Applications", RFC 3550, available at http://www.ietf.org) provides end-to-end network transport functions suitable for applications transmitting real-time data, such as audio, video or simulation data, over multicast or unicast network services. RTP does not address resource reservation and does not guarantee quality-of-service for real-time services.
The data transport is augmented by a control protocol (RTCP) to allow monitoring of the data delivery in a manner scalable to large multicast networks, and to provide minimal control and identification functionality. RTP and RTCP are designed to be independent of the underlying transport and network layers.
For the multicast or broadcast data transport of streaming services in 3G networks RTP may be used. As mentioned above, the Real-Time Control Protocol (RTCP) provides means for monitoring and transporting control information on a delivered RTP stream.
The IETF-specified protocol File Delivery over Unidirectional Transport (FLUTE) (see Paila et al., "FLUTE - File Delivery over Unidirectional Transport", draft-ietf-rmt-flute-07.txt, June 2004, available at http://www.ietf.org) provides means for the unidirectional delivery of files over the Internet, which is particularly suited to multicast networks. The specification builds on Asynchronous Layered Coding, the base protocol designed for massively scalable multicast distribution.
In 3G networks FLUTE may be used for the multicast or broadcast data transport of download services.

**Standard FLUTE**

FLUTE is applicable to the delivery of large and small files to many hosts, using delivery sessions of several seconds or more. Massive scalability is a primary design goal for FLUTE. IP multicast is inherently massively scalable, but the best effort service that it provides does not provide session management functionality, congestion control or reliability. FLUTE provides all of this using ALC and IP multicast without sacrificing any of the inherent scalability of IP multicast. FLUTE is applicable for both Internet use, with a suitable congestion control building block, and provisioned/ controlled systems, such as delivery over wireless broadcast radio systems. FLUTE can be used with both multicast and unicast delivery, but it's primary application is for unidirectional multicast file delivery. FLUTE requires connectivity between a sender and receivers but does not require connectivity from receivers to a sender.
Consequently FLUTE does not provide any inherent means to transmit feedback to the sender, as it is the case for RTP/RTCP.

**Standard RTP/RTCP**

RTP (and its companion protocol RTCP) have been originally designed for both unicast as well as multicast data transport (RTP reporting). Consequently, scalable algorithms for preventing feedback implosion and the corresponding mechanisms have been proposed. In the rest of this document it is referred to the latter as "the standard RTCP algorithm and mechanisms", respectively.
The RTCP standard algorithm and mechanisms have been designed with the assumption of an underlying Any-Source Multicast (ASM) model, where every end system is allowed to send and receive data over the bi-directional transport channel.
Consequently, each participating end system receives the RTP data, as well as the RTCP sender reports (SR) and receiver reports (RR) of all participants. The reception of all RR allows each end system to estimate the number of participants of a session independently, and use this value to calculate the report time interval according to the RTCP standard algorithm. Furthermore, it provides a means for the end hosts to gather information about all participants, which might be useful for some applications like small group conferencing.

**RTCP RR for unidirectional multicast channels**

The Source-Specific Multicast (SSM) model as described S. Bhattacharyya, Ed. "An Overview of Source-Specific Multicast (SSM)" (see RFC 3569, available at http//www.ietf.org) may be particularly suitable for use in conjunction with the 3GPP MBMS architecture as specified in 3GPP TR 23.846: "Multimedia Broadcast/Multicast (MBMS); Architecture and functional description (Release 6)", V6.1.0, December 2003, available at http://www.3gpp.org.

The SSM multicast model introduces less complexity compared to ASM and allows for subscription-based access control. In SSM, each single end system is allowed to transmit data using a unidirectional multicast transport channel. Only those participants subscribed to this channel will receive the messages.

Unlike in ASM, RTCP receiver reports cannot be transmitted over this multicast channel. This limitation for the SSM may however be overcome by each receiver sending feedback over individual unicast transport channels to the sender and the sender reflecting these messages over the multicast channel, according to the specified Receiver and Sender Report bandwidth values.

**SDP bandwidth modifiers for RTCP**

The standard RTCP mechanisms scale the overall control traffic bandwidth to 5% of the RTP Session Bandwidth. For the target application scenario with a single sender, the fraction S of the RTP Bandwidth assigned for sender reports (SR) is 1.25%, while the fraction R equally shared by the end systems for receiver reports (RR) is assigned a value of 3.75%. In order to support assignment of differing allocations, the signaling of RTCP bandwidth modifiers within the Session Description Protocol (SDP) has been proposed by Casner, "Session Description Protocol (SDP) Bandwidth Modifiers for RTP Control Protocol (RTCP) Bandwidth" (see RFC 3556, available at http://www.ietf.org).

The SDP instance for the particular session may be extended with two additional parameters, where b=RS:<bandwidth-value> and b=RR:<bandwidth-value> specifies the overall sender and receiver report rate, respectively. The per-host allocation and report time interval is determined according to the standard RTCP algorithm.

**Multicast feedback regulation**

The bulk of existing work as considered within the IETF RMT Working Group addresses the problem of suppressing redundant feedback, e.g. negative acknowledgements of lost data packets for reliable multicast transmission. Other multicast applications demand for feedback of the end system with an extreme value according to a particular metric.

The goal of these schemes is to find the receiver with the limiting capabilities (bandwidth) in a multicast session, so that the sender adjusts the transmission rate with respect to this receiver's feedback. End-to-end solutions to both problems usually use different variants of feedback timers or polling mechanisms.

Hardly any existing work deals with feedback regulation for collecting state information of participating receivers in a multicast. One prominent mechanism for video streaming applications based on collecting receiver state information is presented in Bolet et al., "Scalable Feedback Control for Multicast Video Distribution in the Internet" (Proceedings of ACM/SIGCOMM 1994, Vol. 24, No. 4, Oct. 1994). The primary goal of the proposed mechanism is to adjust the sending rate of packets according to the reported state information.

Hence, the set of states a receiver is allowed to report is limited to only three different states. Consequently, this approach is not applicable for regulating feedback of statistics in 3GPP MBMS sessions due to the following problems:

The number of participating end systems has to be discovered by each receiver by means of RTCP RR. This requires each participating mobile terminal (MT, UE) to establish a point-to-point feedback channel to the sender.

The sender would then have to reflect all RRs or summarize them and forward this information on the unidirectional multicast channel. The shortcomings of this solution in the context of a cellular and mobile environment are obviously:

- the cost for the establishment and maintenance of the feedback channels (one per MT/UE),

- the overhead on the multicast channel generated by the reflected reports, and

- the power consumption overhead on the end devices which have to maintain and update state information dynamically.

Unicast feedback channels might require a significant amount of resources within a cell, e.g. if every user is to have a dedicated uplink channel having for example an individual spreading code. This situation may lead to an increased call blocking and handoff dropping probability in the corresponding cells.

The per-receiver bandwidth $b_{RR}$ is calculated with the standard algorithm as follows:

$$b_{RR} = \min\left(\frac{\text{avg}(P_{RTCP})}{T_{min}}, \frac{B_{RR}}{n}\right)$$

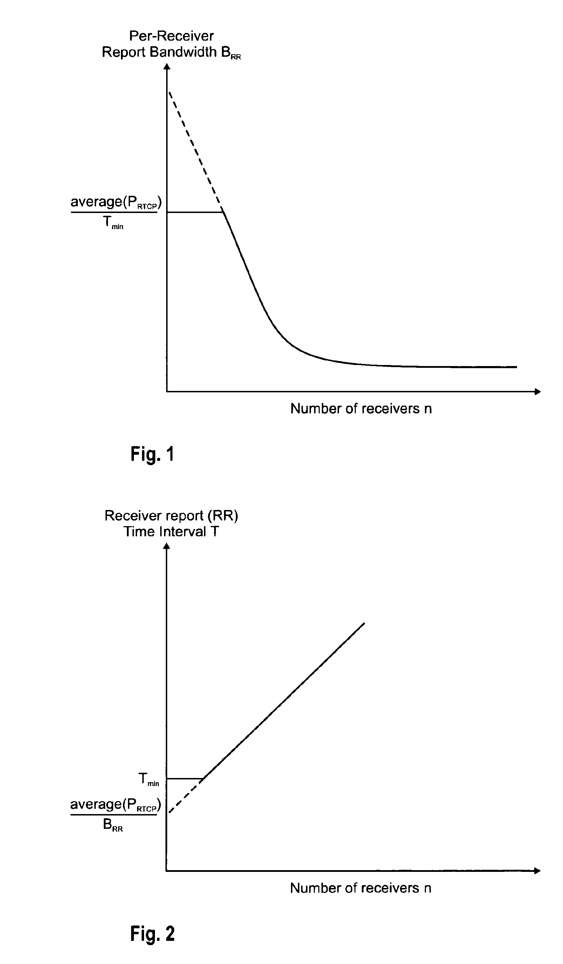

with the minimum time interval $T_{min}$ (e.g. 5s), the RTCP packet size $P_{RTCP}$, the overall receiver report bandwidth $B_{RR}$ (3.75% of the RTP bandwidth), and the number of receivers n. The resulting per-receiver bandwidth $b_{RR}$ as a function of the group size is depicted in Fig. 1.

**Per-receiver bandwidth as calculated with the standard RTCP algorithm**

Due to group dynamics - receivers may join and leave during an ongoing session - the effective per-receiver bandwidth is not known a priori and may vary significantly. In order to avoid frequent re-establishment of feedback channels in order to adapt to the current group size, receiver feedback channels would have to be established with resources reserved to the upper bound, i.e. in the worst case the maximum RR bandwidth. As a consequence, reserved resources for the feedback channels might be used very inefficiently.

The RTCP RR time interval T is calculated by the standard RTP algorithm as follows:

$$T = \max(T_{min}, T_{calc})$$

where

$$T_{calc} = n \times \frac{\text{avg}(P_{RTCP})}{B_{RR}}$$

with the minimum time interval $T_{min}$ the number of receivers n, the RTCP packet size $P_{RTCP}$, and the overall receiver report bandwidth $B_{RR.}$

Fig. 2 shows the RR time interval T (calculated according to the equations above) versus the number of receivers n participating in the RTP session. The time interval increases linearly with the number of participating receivers.

To illustrate the quantitative effect, the following example of streaming audio-visual content with a data rate of 64 kbps may be considered. For an average RTCP RR packet size of 120 Bytes and n = 100 the report time interval will be calculated to $T_{100}$ = 40s, i.e.; for $n$ = 9,000 it already reaches $T_{9,000}$= 3,600s = 1 h.

Following the standard algorithm, receivers schedule their report packets probabilistically within the interval [0.5T, 1.5T] following a uniform distribution. I.e., in the above example the first report packet is expected to be sending after 20s and 0.5h, respectively. Obviously this resulting RR time interval T is unacceptable for practical purposes.

As mentioned above, the standard RTCP approach addresses the characteristics of the ASM model, where every end system may send and receive data over a single bi-directional channel and further provides the possibility of loss reporting. However, for 3GPP MBMS services the interval would easily exceed the duration of a session, making reporting useless.

Further it is to be noted that also for broadcast data delivery it may be considered to provide feedback from the receivers of a broadcast service, especially as content based charging may be used also for broadcast data delivery, where the quality of the received content may be crucial for charging. In contrast to subscription based charging where only the fact that a certain service is received is of importance.

The above mentioned MBMS specific problems may be generalized to multicast or broadcast services received at mobile terminals via an air interface using protocols enabling the provision of feedback from the receiving terminals to the sending source, e.g. a multicast or broadcast server.

In WO 2004/040928 A1 method for reporting for multi-user services in wireless networks is known. The concept of this document is to generate aggregated feedback reports based on the RNC knowledge of the air interface resources in an intermediate network part. RTCP feedback from the terminals can be disabled for the multi-user service, i.e. for all receivers of the multi-user service. In a variation all receivers of the multi-user service may be configured by the RNC to provide event driven feedback. This information from the receivers may also be used in the RNC to form the aggregated feedback.

The method and system proposed in WO 2004/040928 A1 uses the RNC's knowledge on the radio resources of the mobile communication system to generate aggregated feedback reports transmitted to the source of the multi-user service, the server. Thereby the end-to-end concept multi-user service provision is sacrificed as the method proposed in this document requires interactions and data exchange among different layers, for example as the session layer and radio resource control as well as proprietary extensions between radio resource management in the RNC and the intermediate network part to communicate data. These extensions are not feasible if the architecture for providing a multicast or broadcast service should be widely settled.

## SUMMARY OF THE INVENTION

The object of the present invention is to enable configurable and adaptive feedback for multicast or broadcast services provided via an air interface maintaining the end-to-end session concept. Another object may be to provide configurable and adaptive feedback for MBMS streaming services provided using the RTP protocol or MBMS download services provided using the FLUTE protocol.

The object is solved by the subject matter of the independent claims. Advantageous embodiments of the invention are subject matters to the dependent claims.

One of the main aspects of the invention is to provide a solution to deterministically select a set of reporting receivers for a multicast or broadcast service. This may for example be achieved by explicitly addressing the desired reporting receivers from a feedback control entity, which may be the BM-SC in a MBMS architecture.

According to an embodiment of the invention a method for controlling the transmission of feedback of a plurality of mobile terminals receiving a multicast or broadcast service via an air interface of a mobile communication system is provided. The feedback control entity may transmit or forward data of the multicast or broadcast service via a unidirectional downlink channel to at least one mobile terminal. For data transport an unreliable transport protocol and a session protocol may be utilized, wherein the session protocol configures feedback provision of terminals receiving the multicast or broadcast service. The feedback control entity may further determine a number of mobile terminals from the plurality of mobile terminals receiving the multicast or broadcast service for providing session protocol configured feedback to the feedback control entity and may determine feedback control data identifying the determined number of mobile terminals. The feedback control data may be transmitted by the feedback control entity to at least the determined number of mobile terminals, and session protocol configured feedback may be received by the feedback control entity from the determined number of mobile terminals at least one mobile terminal.

In a variation of this embodiment the transmitted feedback control data may indicate at least one terminal identifier identifying the determined number of mobile terminals or a range of terminal identifiers identifying the determined number of mobile terminals. Further, in another variation, the transmitted feedback control data information may further comprise a field indicating whether at least one terminal identifier or a range of terminal identifiers is indicated in by the feedback control data.

In another embodiment of the invention the feedback control entity may determine the feedback control data based on state information of the multicast and broadcast service maintained by the feedback control entity or received from a network entity of the mobile communication system.

In a further embodiment of the invention the feedback control entity may transmit the feedback control data via a multicast or broadcast data channel providing the multicast or broadcast service. Hence, according to this embodiment, an unreliable transport mechanism is used to convey the feedback control data to the mobile terminals.

To ensure that each of the mobile terminals receives the signaled feedback control data in a reliable manner at least once, alternatively, in another embodiment of the invention the feedback control data is transmitted by the feedback control entity via an announcement channel on which the multicast or broadcast service is announced to potential receivers. Thereby, in a variation of this embodiment, a reliable communication protocol may be used for data transport on the announcement channel.

In a further embodiment of the invention, the number of mobile terminals for providing session protocol configured feedback may be for example determined based on the number of participants of the multicast or broadcast service. Moreover, the available bandwidth fraction of the session for providing session protocol configured feedback may be taken into account.

In a variation of this embodiment, the number of participants of the multicast or broadcast service from the state information maintained or received by the feedback control entity. For example when considering a MBMS architecture, the state information of the multicast or broadcast service is comprised within the MBMS UE Context or the MBMS Bearer Context maintained at the feedback control entity.

As will be outlined in more detail below, there may be the possibility that the number of service participants is not directly available to the feedback control entity from state information. In this case, the state information of the multicast or broadcast service may be received from a network entity of the mobile communication network maintaining an MBMS UE Context or an MBMS Bearer Context.

E.g. when considering again an MBMS architecture, the GGSN may signal a BM-SC which operates as a feedback control entity the information necessary for determining which and/or how many terminals receiving the multicast or broadcast service should provide feedback.

In a further embodiment of the invention, the feedback control entity may receive the data of the multicast or broadcast service from a multicast or broadcast service provider.

In a variation of this embodiment, the feedback control entity may forward session protocol configured feedback received from the mobile terminals to the multicast or broadcast service provider.

In a further variation the data of the multicast service may be transported to the feedback control entity using a transport protocol and a session protocol. The feedback control entity may translate at least one of the transport protocol and a session protocol to another transport protocol or session protocol, respectively, before transmitting or forwarding the data of the multicast or broadcast service to the mobile terminals.

Further, it may be possible that the feedback for the multicast service is transported to the feedback control entity using a transport protocol and a session protocol. In this case the feedback control entity may further translate at least one of the transport protocol and a session protocol to another transport protocol or session protocol, respectively, before forwarding the feedback to the multicast or broadcast service provider.

In another variation of this embodiment the feedback control entity form an aggregate of the session protocol configured feedback received from the mobile terminals and may transmit the aggregate of the feedback received as feedback information to the multicast or broadcast service provider.

Another embodiment of the invention further provides a control mechanism which may be used to ensure that the instructed mobile terminals provide session protocol configured feedback. For this purpose, a timer may be started at the feedback control entity upon transmitting the feedback control data to at least the number of mobile terminals.

Further, the feedback control entity may determine whether session configured feedback has been received from the number of mobile terminals before expiry of the timer. If the feedback control entity determines that no session configured feedback has been received from at least one of the number of mobile terminals (which should provide feedback) before expiry of the timer, the feedback control entity may transmit feedback control data to the at least one terminal instructing same to provide session protocol configured feedback.

As has become apparent from the above, the mobile terminals may be identified by a terminal identifier. This terminal identifier may be a unique and/or temporary identifier assigned to a mobile terminal. "Unique" in this context means, that the terminal identifier has to be unique within the feedback control entity's controlled service area. Hence, the terminal identifier may or may not be a globally unique identifier. According to another embodiment of the invention, the feedback control entity assigns terminal identifiers to the mobile terminals receiving the multicast or broadcast service and transmits each terminal identifier to the respective mobile terminal.

Moreover, the feedback control entity may store each terminal identifier in state information of the multicast or broadcast service. The feedback control data may be determined based on the state information, i.e. the terminal identifier(s) of the mobile terminal(s) which is/are instructed to provide session protocol configured feedback may be extracted from the state information.

A further embodiment of the invention relates to a method for controlling the transmission of feedback of mobile terminals receiving via an air interface of a mobile communication system a multicast or broadcast service transmitted or forwarded by a feedback control entity of the mobile communication system. The mobile terminal may receive the multicast or broadcast service via a unidirectional downlink channel. Thereby an unreliable transport protocol and a session protocol may me used, wherein the session protocol configures feedback provision of terminals receiving the multicast or broadcast service.

The mobile terminal may further receive feedback control data indicating whether the mobile terminal is instructed to provide session protocol configured feedback to the feedback control entity and in case the feedback control data indicates to provide session protocol configured feedback, same may establish a bearer for providing feedback to the feedback control entity. Next, session protocol configured feedback indicating reception statistics of the multicast or broadcast service may be transmitted by the mobile terminal to the feedback control entity via the established bearer.

The mobile terminals may be decide based on the feedback control data whether they are instructed from the feedback control entity to provide session protocol configured feedback. This embodiment has the advantage that a bearer for providing session protocol configured feedback is established in case the mobile terminal decide to provide session protocol configured feedback, such that resources e.g. in the radio access network of the mobile communication system are only allocated to the mobile terminal in this case.

The received feedback control data may indicate at least one terminal identifier of a mobile terminal receiving the multicast or broadcast service which is instructed to provide feedback or a range of terminal identifiers identifying those mobile terminals receiving the multicast or broadcast service that are instructed to provide feedback.

As outlined previously, the feedback control data may be received via a multicast or broadcast data channel providing the multicast or broadcast service or via an announcement channel on which the multicast or broadcast service is announced to potential receivers.

When receiving the data via the multicast or broadcast data channel, the data may be delivered to the terminal using an unreliable transport protocol, for example UDP.

It may be desirable that each of the terminals receives the signaled feedback control data at least once in a reliable manner. In case the feedback control data is provided by means of an unreliable communication protocol it may not be assured that each receiving terminal may have the necessary parameters for deciding whether to provide session protocol configured feedback present. Therefore, according to a further embodiment of the invention, when receiving the data via an announcement channel, a reliable communication protocol may be used for data transport on the announcement channel.

Another embodiment of the invention considers the case that it may be desirable the feedback control entity may start and stop feedback transmission of individual mobile terminals. As outlined above, the feedback control data may be used to instruct terminals to start feedback provision. Further reconfiguration data transmitted by the feedback control entity may be used to instruct individual mobile terminals to stop feedback provision. The mobile terminal may therefore receive reconfiguration data indicating which mobile terminals providing session protocol configured feedback are to stop feedback provision.

In case the mobile terminal is instructed to stop feedback provision it may tear down the established bearer. This may be feasible in order to free utilized air interface resources.

As outlined previously, the feedback control entity may assign a terminal identifier to the mobile terminals receiving the multicast or broadcast service. In an embodiment of the invention the service is a multicast service and the mobile terminal may receive a terminal identifier from the feedback control entity. For example, the terminal identifier may be received by the mobile terminal in service joining procedure of the multicast service, i.e. when joining a multicast service session.

In a further embodiment of the invention, in order to determine whether the feedback control data indicates to provide session protocol configured feedback, the mobile terminal may determine whether the received feedback control data indicate the terminal identifier and if so may provide session protocol configured feedback.

In another embodiment of the invention the feedback control data and the multicast or broadcast service data is provided within a download session according to the FLUTE protocol. This embodiment may for example be feasible when providing download multicast or broadcast services.

Further, an embodiment of the invention foresees that the multicast or broadcast service is provided using the RTP protocol and feedback is provided using the RTCP protocol, wherein a fraction of the available bandwidth for a session providing the multicast or broadcast service is allocated to the RTCP protocol messages. In a variation of this embodiment the session protocol configured feedback may be provided in form of receiver reports of the RTCP protocol. This embodiment of the invention may be especially feasible when providing streaming services.

According to another embodiment of the invention the feedback control data may further indicate the report time interval and the available bandwidth for providing session protocol configured feedback using the RTCP protocol. Thereby, the feedback control data for providing session protocol configured feedback may be reconfigured by the feedback control entity.

In another embodiment the feedback control entity may comprise the feedback control data within a sender report message of the RTCP protocol transmitted by the feedback control entity.

Another embodiment foresees that the IMSI of a mobile terminal is used as a terminal identifier. Hence, instead of defining an possibly additional terminal identifier as outlined in an embodiment of the invention above, the feedback control entity may use an identifier that is already available, for example within the state information of the multicast or broadcast service.

In order to ensure privacy of the service participants, the feedback control data may comprise information in encrypted form. For example, the IMSIs indicated by the data may be indicated by data in encrypted format.

Moreover, according to another embodiment of the invention a feedback control entity for controlling the transmission of feedback of a plurality of mobile terminals receiving a multicast or broadcast service transmitted or forwarded by a feedback control entity via an air interface of a mobile communication system is provided. The feedback control entity may comprise a transmitter for transmitting or forwarding data of the multicast or broadcast service via a unidirectional downlink channel. Thereby an unreliable transport protocol to at least one mobile terminal and a session protocol configuring feedback provision of terminals receiving the multicast or broadcast service may be used.

The feedback control entity may further comprise a processor for determining a number of mobile terminals from the plurality of mobile terminals receiving the multicast or broadcast service for providing protocol configured feedback to the feedback control entity, and for determining feedback control data identifying the determined number of mobile terminals. The transmitter may be adapted to transmit the feedback control data to at least the determined number of mobile terminals.

Moreover, the feedback control entity may comprise a receiver for receiving session protocol configured feedback from the determined number of mobile terminals at least one mobile terminal.

In another embodiment of the invention, the feedback control entity may further comprise means adapted to execute the steps performed by the feedback control entity in one of the various embodiments of the feedback control method outlined above.

Another embodiment of the invention provides a mobile terminal receiving via an air interface of a mobile communication system a multicast or broadcast service transmitted or forwarded by a feedback control entity. The mobile terminal may comprise a receiver for receiving the multicast or broadcast service via a unidirectional downlink channel. Further, an unreliable transport protocol and a session protocol configuring feedback provision of terminals receiving the multicast or broadcast service may be used.

The receiver may be further adapted to receive feedback control data indicating whether the mobile terminal is instructed to provide session protocol configured feedback to the feedback control entity and the mobile terminal may further comprise a processor for establishing a bearer for providing feedback to the feedback control entity in case the feedback control data indicates to provide session protocol configured feedback.

Moreover, the mobile terminal may further comprise a transmitter for transmitting session protocol configured feedback indicating reception statistics of the multicast or broadcast service to the feedback control entity via the established bearer.

In another embodiment of the invention, the mobile terminal may further comprise means adapted to execute the steps performed by the mobile terminal in one of the various embodiments of the feedback control method outlined above.

Further, one embodiment of the invention relates to a mobile communication system comprising a feedback control entity as defined above and at least one mobile terminal as defined above for receiving a multicast or broadcast service from feedback control entity via an air interface.

A further embodiment of the invention relates to a computer-readable medium for storing instructions that, when executed by a processor of a feedback control entity, cause the processor to control the transmission of feedback of mobile terminals receiving via an air interface of a mobile communication system a multicast or broadcast service transmitted or forwarded by the feedback control entity by transmitting or forwarding data of the multicast or broadcast service via a unidirectional downlink channel and using an unreliable transport protocol to at least one mobile terminal and a session protocol, wherein the session protocol configures feedback provision of terminals receiving the multicast or broadcast service, determining a number of mobile terminals from the plurality of mobile terminals receiving the multicast or broadcast service for providing protocol configured feedback to the feedback control entity, determining feedback control data identifying the determined number of mobile terminals, transmitting the feedback control data to at least the determined number of mobile terminals, and receiving session protocol configured feedback from the determined number of mobile terminals at least one mobile terminal.

In a further embodiment, the computer-readable medium may further store instructions that, when executed by the processor of the feedback control entity, cause the processor perform the steps performed by the feedback control entity in one of the various embodiments of the feedback control method outlined above.

Moreover, another embodiment of the invention provides a computer-readable medium for storing instructions that, when executed by a processor of a mobile terminal, cause the processor to control the transmission of feedback of the mobile terminal receiving via an air interface of a mobile communication system a multicast or broadcast service transmitted or forwarded by a feedback control entity by receiving the multicast or broadcast service via a unidirectional downlink channel and using an unreliable transport protocol and a session protocol, wherein the session protocol configures feedback provision of terminals receiving the multicast or broadcast service, receiving feedback control data indicating whether the mobile terminal is instructed to provide session protocol configured feedback to the feedback control entity, in case the feedback control data indicates to provide session protocol configured feedback, establishing a bearer for providing feedback to the feedback control entity, and transmitting session protocol configured feedback indicating reception statistics of the multicast or broadcast service to the feedback control entity via the established bearer.

In another embodiment the computer-readable medium may further store instructions that, when executed by the processor of the mobile terminal, cause the processor to perform the steps performed by the mobile terminal in one of the various embodiments of the feedback control method outlined above.

## BRIEF DESCRIPTION OF THE FIGURES

In the following the present invention is described in more detail in reference to the attached figures and drawings. Similar or corresponding details in the figures are marked with the same reference numerals.

| | |
|---|---|
| Fig. 1 | shows the per-receiver report bandwidth as a function of the number of receivers n receiving which have subscribed to an RTP session, |
| Fig. 2 | shows the receiver report (RR) time interval T as a function of the number of receivers n receiving which have subscribed to an RTP session, |

| Fig. 3 to 7 | show feedback control data formats according to different embodiments of the invention |
| Fig. 8 | shows the format of application-defined parameters transported in a RTCP application-defined packet according to an embodiment of the invention, |
| Fig. 9 | shows the format of an extended RTCP receiver report block according to an embodiment of the invention, |
| Fig. 10, 11 & 12 | show different scenarios for providing an multicast and broadcast service to users and for controlling the feedback of the receiving terminals according to different embodiments of the invention, and |
| Fig. 13 & 14 | show a mobile terminal and a feedback control entity, respectively, according to different embodiments of the present invention. |

## DETAILED DESCRIPTION OF THE INVENTION

The following paragraphs will describe various embodiments of the invention. For exemplary purposes only, most of the embodiments are outlined in relation to a UMTS communication system and the terminology used in the subsequent sections mainly relates to the UMTS terminology. However, the used terminology and the description of the embodiments with respect to a UMTS architecture is not intended to limit the principles and ideas of the present inventions to such systems.

Also the detailed explanations given in the Technical Background section above are merely intended to better understand the mostly UMTS specific exemplary embodiments described in the following and should not be understood as limiting the present invention to the described specific implementations of processes and functions in the mobile communication network.

The ideas and principles that will be outlined in the subsequent sections may be applicable to multicast or broadcast services received at mobile terminals via an air interface using a unidirectional downlink as well as an unreliable transport protocol for data delivery. Further, protocols enabling the provision of feedback from the receiving terminals to the sending source, e.g. a feedback control entity, are used. It is noted that in the scenario described above, the feedback may not be provided via the channel through which the service data is received since same is unidirectional.

One of the key aspects of the invention is a deterministic selection of mobile terminals which should provide feedback for a multicast or broadcast service received by same. For example, this may be achieved by explicitly addressing the desired reporting receivers from a feedback control entity.

In this respect it is important to note that the basis for a multicast or broadcast service is an end-to-end concept, which means that the exchanged information between the end points is transparent to optional intermediate nodes. This is also reflected by the utilized protocols that follow a layered architecture, which capsulate the conveyed information within a certain layer. Information at one layer is initially not visible to other layers. Only adjacent layers can exchange information over well-defined services and service access points. As the transmitted information of the multicast or broadcast service is only visible to the sending source and the receiving sink, i.e. the feedback control entity and the receivers, the intermediated nodes only support protocols of lower layers than the used transmission protocol.

The idea of deterministically selecting a subset of terminals receiving the multicast or broadcast service to provide feedback keeps this end-to-end concept and does not break the layered architecture of the utilized protocols.

In contrast, generating feedback in an intermediated node of the UTRAN or CN would break these concepts and would require changing the protocols in an incompatible way and extending the intermediate nodes to perform improper functionality. Either one of these assumptions is not feasible if the architecture for providing a multicast or broadcast service is widely settled.

Another embodiment of the present invention is based on the idea to provide a configurable and adaptive feedback solution for MBMS Services using a deterministic selection of UEs for providing feedback. In the following this embodiment will be explained in more detail.

MBMS streaming services typically use the RTP protocol for delivery of streaming media. The companion RTCP protocol may be used for collecting RTP session feedback and to provide a loose control of the session. RTCP feedback may be used to collect statistics about ongoing RTP multicast session. As the underlying unreliable transport protocol UDP may be assumed. It is further important to note that during RTP session setup the parameters for providing feedback are provided to the service participating UEs which may configure feedback provision according to the indicated parameters.

Instead of the standard RTP algorithms, i.e. using RTCP RR to estimate the number of participating mobile terminals (MT), the scheme proposed by this embodiment of the invention uses MBMS signaling and/or MBMS state information to determine the exact number of MT/UE in a session. This approach avoids the necessity of having a feedback channel for every receiver, the fact that every participant receives all messages from the rest of participants and eliminates the multicast/broadcast as well as computation overhead.

Considering MBMS download services, the FLUTE protocol may be used to transmit the data to the receivers. An unreliable transport protocol may be assumed being used for data delivery, e.g. UDP is typically used. The content of such a FLUTE session is described in a File Delivery Table (FDT), which is transmitted in so-called FDT Instances within the FLUTE session. These FDT Instances can be transmitted and repeated at any time during a session. It is important to note that during a FLUTE session the parameters for providing feedback might be provided in those FDT Instances to the UEs, which may configure feedback provision according to the indicated feedback control data.

Generally, it should be noted that in the MBMS specifications, there are two types of state information: a MBMS Bearer Context describing a particular MBMS bearer service and a MBMS UE Context, which comprises UE-specific information related to a specific MBMS bearer service. Both contexts may be created in the RAN, SGSN, GGSN and BM-SC. A UE context may be created for each UE receiving the service. At present, the Bearer Context in the GGSN contains the number of UEs receiving the service.

However, it may of course also possible that other RAN or CN nodes store state information of the service within a context, that allow either to determine the number of service participating UEs e.g. by counting the number of contexts created (i.e. each UE has its own UE context in the network node) or by a field within a context indicating the total number of service participants.

In case when employing a MBMS architecture for service provision, e.g. for the number of participants the UE contexts of the BM-SC can be counted or the GGSN can provide the total number of participants signaling the respective field value of the Bearer Context to the BM-SC (which is operated as a feedback control entity in this embodiment).

If an addressed UE receives this signaling it sets up a feedback channel and sends reports to the BM-SC. The kind and scope of the reports depend on the specific MBMS user service, e.g. download or streaming service, and might be determined by some profile information or rely on specific signaling. This is out of scope of the present invention and no further specified here.

As already outlined above state information on the multicast or broadcast service, which may for example be maintained in a context, may be used to determine the individual identities of the participating receivers in a MBMS user service. Especially the MBMS UE Context, which is also created in the BM-SC, contains the International Mobile Subscriber Identity (IMSI) identifying a specific user which may be used to identify individual terminals participating in the service.

The IMSI consists of a Mobile Country Code (MCC), a Mobile Network Code (MNC) and a Mobile Station Identification Number (MSIN). The MCC is a three-digit number uniquely identifying a given country and the MNC is either a two or three digit number used to uniquely identify a given network from within this specified country. The MSIN uniquely identifies a mobile or subscription from within a given network. It is comprised of a maximum of 10 digits. In total the IMSI never exceeds 15 digits (0-9) and therefore might be represented by a 50-bit integer value. The actual length of the identifier used in the signaling messages may depend on the chosen representation and encoding of the identifier. For example an IMSI may also be represented as a string using a Unicode encoding, which would result in 240-bit usage.

With the knowledge on the service participating terminals' identifiers and the total number of service participants, the BM-SC may select a well-defined subset of receivers to be configured as feedback reporting UEs. This subset may be configured manually or might relay on some automatic selection process, e.g. that always a certain percentage of the service participating UEs should be configured as reporting receivers. By transmitting respective messages to these UEs the BM-SC may instruct same to start (or to stop) feedback provision as set up by the session protocol, e.g. RTP/ RTCP. The messages may comprise feedback control data which inter alia identify either one or more individual UEs that are instructed to start (or) stop feedback provision.

In a further embodiment of the invention, there may be two types of operations of a UE, which may be configurable. The first is to configure a UE to send feedback and the second is to stop a feedback providing UE to send feedback.

The operation of the UEs may for example be controlled by means of an operation flag (O). If the operation flag in the feedback control data is set (e.g. O=1) the respective UE(s) start(s) feedback provision. This may imply that a UE establishes a feedback bearer and sends feedback. If the flag is not set (e.g. O=0) an UE stops feedback reporting which may also include a teardown of the established feedback bearer.

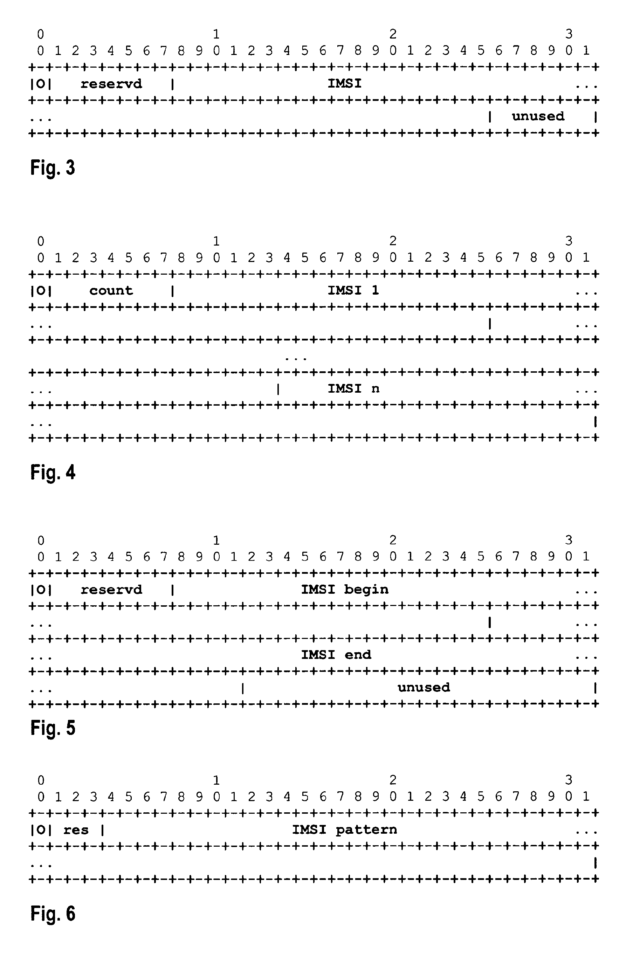

Fig. 3 shows an exemplary message format comprising feedback control data to configure a single receiver. The message may contain a flag indicating the requested operation mode and the IMSI identifying the receiver which is instructed to provide feedback to the feedback control entity. Further, some bits in the message format (reservd field) may be reserved for future signaling options.

Since the MBMS transport bearers may be unreliable, these configuration messages transmitted by the feedback control entity may get lost. According to a further embodiment of the invention the feedback control entity may to cope with this situation by setting an internal timer $T$ for each receiver that should be configured. The value of T may be selected such that the respective UE has enough time to set up (or teardown) a feedback bearer.

If the receiver does not follow the signaled instruction within the time span T, the feedback control entity may assume that the last configuration message has been lost. In this case the feedback control entity may (re-)transmit a configuration message again.

The feedback control entity may not have to cope with situations that a UE leaves the MBMS user service or gets out of coverage area of the feedback control entity and is therefore not reachable anymore. These cases may be handled within the MBMS architecture and would lead to a removal of the MBMS UE Context of the specific user. Therefore, in case a configuration message instructing one or more UEs to provide feedback gets lost, the feedback control entity may verify that the MBMS UE Context for the UE(s) is still valid and may send or repeat the signaling again.

Another embodiment of the invention considers that the scope of MBMS is data distribution to a large audience. Even selecting only a small subset of this audience to provide feedback, could lead to a large group of UEs that have to be configured. Therefore, it may be desirable to enable efficient signaling and to keep the introduced overhead as small as possible. Further it may be likely that the same receiver operation (reporting or not reporting) is requested for the majority of the UEs.

It should be noted here that in case the UEs are configured not to provide feedback by default it may be necessary to instruct those UEs which have been selected by the feedback control entity to provide feedback to do so. In case feedback provision is enabled at the terminals by default, the feedback control entity may need to signal some of the UEs within the service not to provide feedback.

Therefore it may be advantageous to group those receivers according to the requested operation mode instead of addressing the individual terminal by individual messages. Different exemplary options for group signaling are described in the following.

According to one embodiment of the invention all IMSIs according to a requested operation mode are grouped, which eliminates the necessity to specify the requested operation mode for each individual IMSI.

Fig. 4 shows a possible feedback control data format according to this group signaling variant. The feedback control data format comprises an operation flag O, followed by a count field, which may indicate how many IMSIs belong to the current group. Following this field the individual IMSIs of UEs which should start/stop feedback reporting are listed.

Obviously there are some bits needed for the additional count field. Hence, using this message format may be especially feasible if the number of grouped IMSIs exceeds the space needed for the count field.

Another embodiment of the invention foresees signaling a range of terminal identifiers in a configuration message. All UEs being associated to a terminal identifier (e.g. IMSI) in the given range are instructed to start/stop feedback provision.

The BM-SC being the feedback control entity in this example may know all terminal identifiers (e.g. IMSIs) of the individual UEs. Therefore it is able to determine an interval by specifying two IMSIs (begin and end of the interval) that comprises an exactly known number of UEs. Upon receiving a message including the terminal identifier range, all UEs receiving the configuration message may check if their individual terminal identifier is within the range. If so the UE may perform the requested operation, i.e. may establish or teardown a feedback bearer and may start or stop feedback provision.

Fig. 5 shows a feedback control data format according to this embodiment. In an optimal case all desired UEs which need to be instructed an operation mode by the feedback control entity may be addressed by specifying two IMSIs.

According to a further embodiment of the invention, another possibility to define a group of specific receivers may be to specify an IMSI pattern, which is signaled to the receivers. This pattern may be represented by a partly qualified IMSI, e.g. only the first 10 digits and the remaining digits being wildcards.

As the BM-SC may be aware of all individual IMSIs of the receivers, it is possible to compute such a pattern that exactly the desired subset of receivers is included. On receiving such a signaling message the receivers may check if the specified parts of the IMSI pattern match their individual IMSI. In case of a positive match the requested operation is performed, i.e. to establish or teardown a feedback bearer. In Fig. 6 a message according to this option is shown. At best, all desired receivers may be addressed by specifying a single IMSI pattern, which may therefore reduce less overhead than the range signaling option described above.

The signaling options and their feedback control data formats described above have certain advantages and disadvantages. Concerning the group signaling option shown in Fig. 4 the advantage may be the flexibility if individual receivers have to be addressed. The drawback of the scheme, especially if there is a large group to be configured, is that always all individual IMSIs have to be specified. In contrast for the range and pattern signaling option shown in Fig. 5 and Fig. 6 respectively, the situation is reversed. It is very efficient if there is a large group to configure and gets inefficient if several messages need to be sent to reach all UEs which have to be addressed.

Another embodiment of the invention relates to a combination of these two signaling options by introducing an additional mode field (M). According to this field either the group signaling, the range signaling or the pattern signaling options is used. Through this combination the drawbacks of the individual options are eliminated and solely the advantages remain.

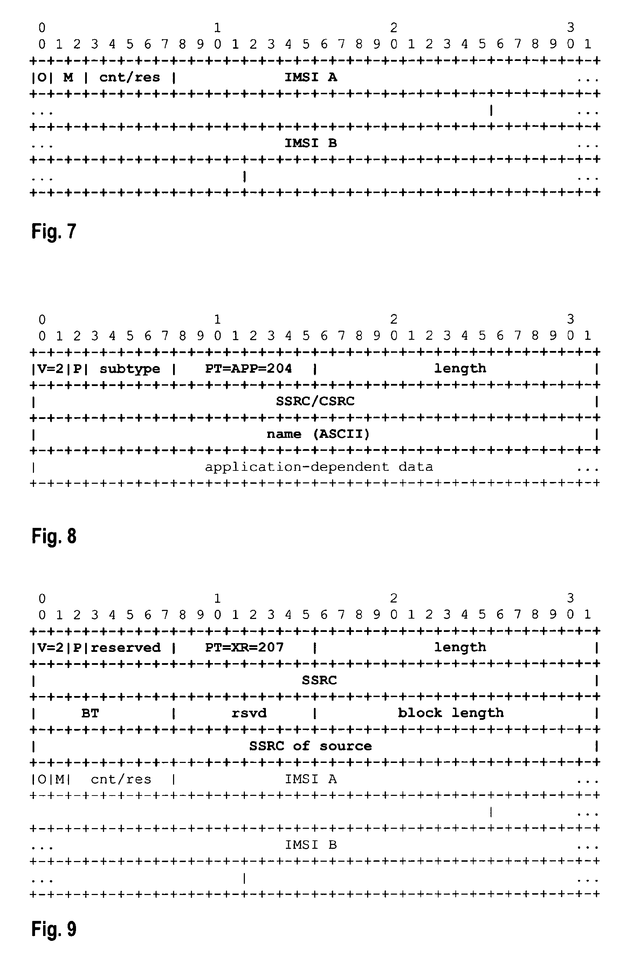

Fig. 7 shows an exemplary feedback control data format according to this scheme. If the mode field indicates that the group signaling option is used (e.g. M=00), the cnt/res field indicates how many IMSIs are grouped together and will therefore follow in the remainder. If the mode field indicates that the range signaling option is used (e.g. M=10), IMSI A and IMSI B specify the IMSI interval and the cnt/res field is ignored. Finally the mode field might indicate the pattern signaling option (e.g. M=11), in which case the IMSI pattern will follow in the remainder and the cnt/res field is ignored.

Depending on the situation an appropriate mode can be selected. If there are individual receivers to be address, selecting the group mode provides the most advantages. If there is a large group to configure the range or pattern mode might be the best choice. Which of the latter modes is the best option depends on how easy an appropriate range or pattern can be computed by the BM-SC, so that exactly the desired receivers are grouped together.

Further another embodiment of the invention relates to the transport of feedback control data to the UEs. Different protocols and thereby different message formats may be utilized to transmit the feedback control data to the receivers depending on the used delivery method for a MBMS user service. Therefore the previously described feedback control data formats have to be mapped onto the used transport and signaling protocols, which may also require some adaptation of the schemes, e.g. extensions to existing message formats or even the definition of new messages.

According to one embodiment of the invention, the feedback control data used for receiver configuration, i.e. for instructing an UE to provide feedback or not, may be transported to the receivers utilizing RTCP sender report blocks. For this purpose several options may be available.

A first possibility may be to use application-defined packets (APP packets) conforming the RTCP specification as shown in Fig. 8. Generally, the APP packet is intended for experimental use as new applications and new features are developed, without requiring packet type value registration.

In Fig. 8, the fields V, P, subtype, PT, length and SSRC are defined in RFC 3500, section 6.7. The name field may for example be set to "MBMS" but any other name consisting of up to 4 octets may be used instead. Further, the application-dependent data may be appended to the fields mentioned before.

These application-dependent data may be the feedback control data according to the different formats outlined above in reference to Fig. 3, Fig. 4, Fig. 5, Fig. 6 and Fig. 7.

A further embodiment of the invention foresees to transmit the necessary parameters by means of a newly defined extended receiver report block (XR report block). Fig. 9 shows an XR report block according to an exemplary embodiment of the invention which comprises feedback control data formatted according to Fig. 7. In "RTP Control Protocol Extended Reports (RTCP XR)", Friedman et al. (see RFC 3611, available at http://www.ietf.org) specify a framework for defining ad-hoc RTCP report blocks with extended capabilities. According to this embodiment, such a block may be defined to convey the reporting information as specified above (e.g. reporting interval, etc.).

In the XR report block shown in Fig. 9, the fields V, P, reserved, PT, length, SSRC are defined as in RFC 3611, section 2. Similarly the fields BT, rsvd (for type-specific info) and block length are defined in section 3 of RFC 3611. The field BT (block type) takes an unused value in the range (8, 255). Values 0-7 are already used. Appended to these fields the feedback control data may follow.

This option has the advantage that it includes the possibility to implement the logic directly in the RTP protocol instead of at the application layer when using an APP report block as outlined above. The solution proposed by this embodiment of the invention has the further advantage that receivers may use or provide extended reporting possibilities available as per RFC 3611 or defined within this document.

In a further embodiment of the invention it is suggested to use methods such as profile specific extensions in the RTP header, an ad-hoc report block or a profile-specific extension for RTCP for conveying the parameters for allowing the mobile terminals to determine whether to provide feedback to same.

Further in another embodiment the FLUTE protocol may be used for transport of feedback control data and service data. The FLUTE protocol might be used for data transfer in download services specified for the MBMS architecture. Arbitrary files including multimedia content might be transmitted using FLUTE and stored at the terminals for later retrieval.

A basic element of FLUTE is the file delivery table (FDT), which is used to describe the complete content of a file delivery session (FLUTE session). Such a session might consist of multiple files that should be delivered to all receivers. Each file is represented as a separate entry in the FDT, describing required parameters for transmission of the file in the FLUTE session. The FDT itself is delivered within the FLUTE session (in-band) as FDT Instances and so treated the same way as the transmitted files. A FDT Instance is a XML structure whose parameters follow a FDT XML schema.

In comparison with the RTP/RTCP protocol there is no inherent method to dynamically changing or adapting the content or information transmitted in the FLUTE session, as the server compiles the complete session in advance. The only dynamic elements of a FLUTE session are the FDT Instances, which can be transmitted and especially repeated at any time within the session.

In accordance with a further embodiment of the invention these FDT Instances may be appropriately extended to convey the required signaling parameters. For example the following XML schema may extend the definition of a FDT

Instance:

```
<!-- Global type definition -->
<xs:complexType name="RIDsType">
    <xs:sequence>
      <xs:element name="IMSI" type="xs:string"
                  maxOccurs="unbounded"/>
    </xs:sequence>
    <xs:attribute name="Operation"
                  type="xs:boolean"
                  use="required"/>
    <xs:attribute name="Mode"
                  type="xs:string"
                  use="required"/>
    <xs:anyAttribute processContents="skip"/>
</xs:complexType>



<!-- Element added to the FDT-Instance element definition -->
<xs:element name="RIDs" type="RIDsType" minOccurs="0"
        maxOccurs="unbounded"/>
```

The following shows an example of such an extended FDT Instance:

```
<?xml version="1.0" encoding="UTF-8"?>
<FDT-Instance  xmlns:xsi="http://www.w3.org/2001/XMLSchema-
                instance"
                xmlns:fl="http://www.example.com/flute"
                xsi:schemaLocation="http://www.example.com/fl
                ute-fdt.xsd"
                Expires="2890842807">
<File ... />
    <RIDs Operation="true" Mode="group">
        <IMSI>1234567890</IMSI>
        <IMSI>5555555555</IMSI>
    </RIDs>
</FDT-Instance>
```

This might be used to signal the UEs identified by IMSI "1234567890" and "5555555555" that they have to set up a feedback bearer and send reports. It should be noted that the IMSIs serve merely exemplary purposes in the examples of the different embodiments of the invention. Note further that the <File> element in the example above normally carries the required information to transmit a file in the FLUTE session.

Another embodiment of the invention relates to reliable signaling of the feedback control data, e.g. via an announcement channel. In this embodiment, the feedback control data is included in a session description using a SDP attribute. An exemplary syntax definition thereof may be:

```
attribute        =   "a=RIDs" parameter-list
parameter-list   =   operation-param ";" mode-param ";" imsi-
                     param
operation-param  =   "operation=" (0 / 1)
mode-param       =   "mode=" ("group" / "range" / "pattern")
imsi-param       =   "imsi=" imsi *("," imsi)
imsi             =   1*15DIGIT
```

Note that in this case the feedback control entity may not schedule a timer T for each selected receiver, as reliable transport of the signaling message is assumed. In the following an example of such an attribute is shown for signaling an IMSI group:
a=RIDs operation=1 mode=group imsi=1234567890, 5555555555

Like in the FLUTE FDT Instance example above, this attribute may be used to signal the UEs identified by their IMSI that they have to set up a feedback bearer and send reports.

As seen in the sections above, in case an unreliable transport mechanism is used to convey the feedback control data, same may get lost during transport. This may be in particular true in case RTP or FLUTE packets are transferred over the unreliable UDP protocol. UDP is a transport protocol that provides an unreliable datagram service. It is typically used to unicast/multicast streaming media (like MPEG4) in RTP packets. The corresponding RTCP packets are also transported over UDP.

The BM-SC (acting as a feedback control entity in this embodiment) may also decide to send this information in a more reliable way. It is noted that in the embodiments above the BM-SC has been considered as the source of feedback control data transmitted to the mobile terminals. However, it is also possible that the feedback control entity providing the content of a multicast or broadcast service (session) may determine and propagate these data to the mobile terminals receiving the service.

In the MBMS framework, there are methods to transmit the feedback control data in a more reliable way. Terminals may retrieve the session description information (e.g. as SDP description) of an MBMS service using a point-to-point connection to, e.g., a HTTP server or they may receive an SMS comprising this information before joining an MBMS session.

In the exemplary embodiments outlined with respect to Fig. 3 to 9, the IMSI has been used to identify a receiver that should be configured to provide feedback. The IMSI is a globally unique identifier, which comprises user individual information and should therefore not be made public if possible. As the signaling messages are transmitted to all receivers of the MBMS service, this surely poses a privacy and security conflict, as it might ease eavesdropping of the IMSI of other receivers. Especially, since the signaling is on the session-protocol level and therefore close to the application layer, eavesdropping may be easier than extracting information from lower layer protocols.

Especially the group signaling option in which individual IMSIs are listed may poses a significant security issue. For the range and pattern signaling option the potential risk is lower. The pattern signaling option does not use fully qualified IMSIs. In the range signaling option only IMSIs, which are currently not present, could be used to define a range.

In alternative solutions another identifier, for example a temporary identifier may be used instead of the IMSI identifier. According to a further embodiment, it is therefore proposed to use a temporary identifier in the signaling messages instead of the IMSI. This identifier must be at least unique in the context of the MBMS service where it is used.

For example, there are several temporary identifiers specified for a UE in 3GPP. One candidate already defined may be to use the Packet-Temporary Mobile Subscriber Identity (P-TMSI). This identifier is unique within a routing area (RA) of a SGSN. In case feedback is not controlled by the SGSN, however, the usage of the P-TMSI may not be a feasible solution as the SGSN could change due to user mobility.

Therefore according to another embodiment of the invention, a new temporary identifier may be created in the BM-SC acting as the feedback control entity for each participating user in a MBMS service. This identifier may be assigned to the terminal when it subscribes to the MBMS service and is stored in the MBMS UE Context. When a user leaves the MBMS service the temporary identifier may be deleted together with the MBMS UE Context in the BM-SC.

Another possible solution according to further embodiment of the invention may be the use of encrypted IMSIs instead of specifying the IMSIs in plain text. When such a signaling message is received by a UE, it tries to decrypt the contained identifiers. It may be assured that only the individual UE can decrypt its own encrypted identifier.

The key used to encrypt and decrypt the IMSI may be individual for each UE. Due to the possibly large audience of a MBMS service allocation and distribution of individual encryption keys is not possible. Therefore the used encryption scheme must be based on the individual IMSI of the UEs, i.e. encryption and decryption of the IMSI in the signaling messages with the IMSI itself.

The other alternative for an encrypted IMSI may be the use of a hash-function scheme. In this alternative it is not necessary to use an encryption key for each UE as the BM-SC only sends the hash value of an IMSI. When a UE receives such a request it may calculate the hash value from its own IMSI. If the hash value sent from BM-SC matches with the value calculated in UE it sends feedback. Since the hash function is a one-directional function, it is not possible for an UE to learn the IMSI of another UE. As in this alternative the IMSI itself is not send over air interface, the described security threat will be decreased.

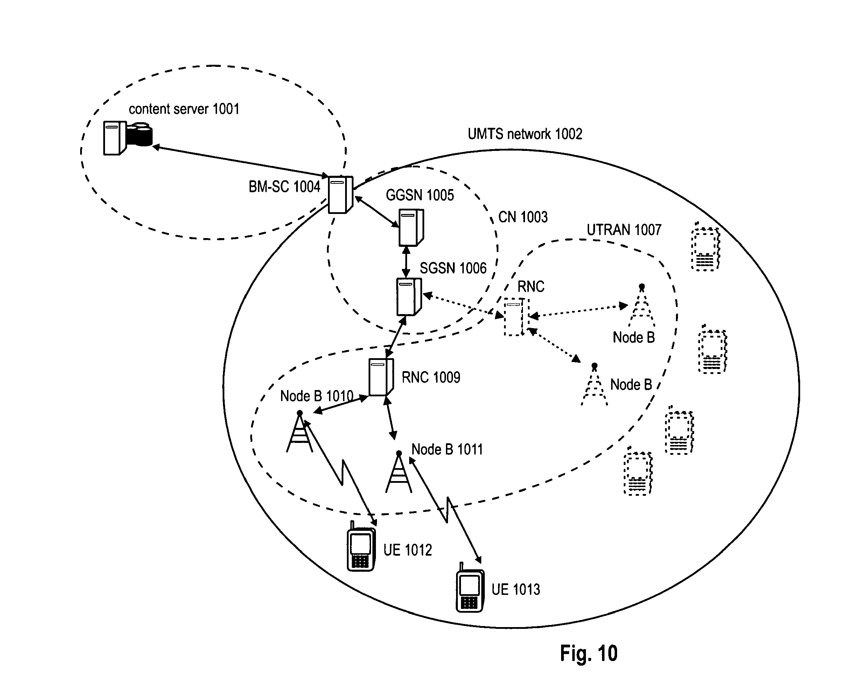

Next, some possible scenarios for providing a multicast or broadcast service to users and capable of employing the invention outlined in the various embodiments above are outlined for exemplary purposes with respect to Fig. 10, 11 and 12.

In Fig. 10 a content server 1001 provides a multicast or broadcast session via a feedback control entity, for example the BM-SC 1004, to users for example over an IP-based network. Some of the users receiving the service data may be located in a mobile communication network such as an UMTS network 1002, which is considered in the following for exemplary purposes.

According to one embodiment of the invention, the BM-SC 1004 located within the UMTS network 1002 may control the provision of feedback of service-receiving terminals 1012, 1013 as outlined above. The BM-SC 1004 receives the service data from the content server 1001 and may transmit same within an MBMS session to the terminal 1012, 1013 for example via an GGSN (GPRS Gateway Support Node) 1005 and an SGSN (Serving GPRS Support Node) 1006 of the CN (core network) 1003, at least one RNC 1009 and at least one Node B 1010, 1011. Please note that the BM-SC 1004 may also be responsible for announcing the service availability via an announcement channel in the UMTS network 1002 and be involved in service admission, i.e. in UEs joining and leaving the service. As outlined previously in reference to one embodiment of the invention, the service announcements may comprise the feedback control data for feedback control.

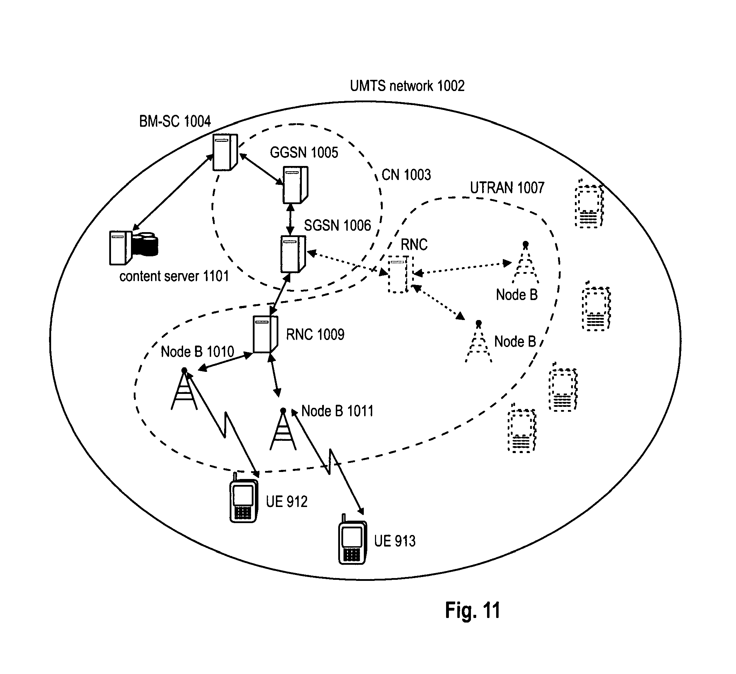

Turning now to Fig. 11, an exemplary embodiment of the invention in which the content server 1101 is located within the mobile communication system is illustrated. Essentially, the same considerations made for the embodiments of the invention outlined with reference to Fig. 10 above apply here as well, except that employing an IP-based network as shown in Fig. 10 for data provision may not be necessary.

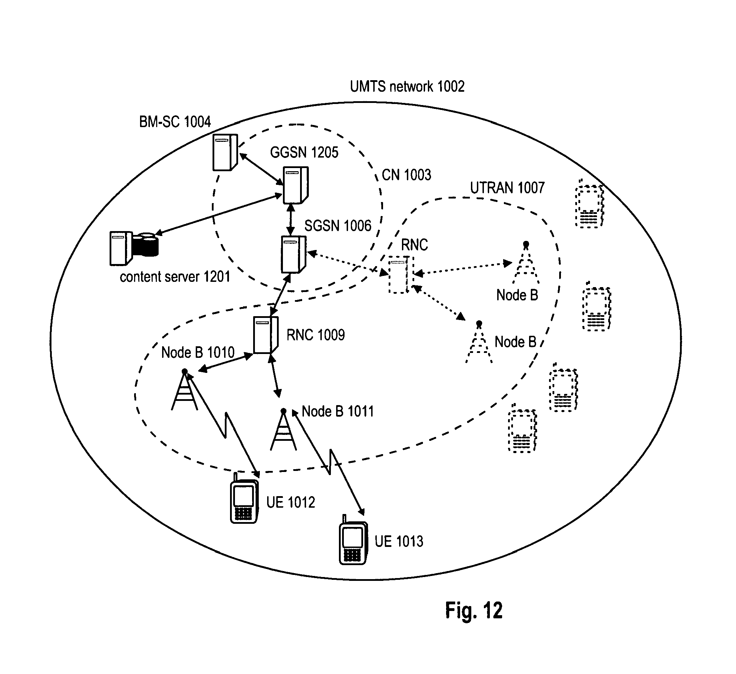

In Fig. 12 an exemplary embodiment of the invention wherein the content server 1201 is the source of the data of the multicast or broadcast service is illustrated. In this embodiment of the invention the content server 1201 is providing the service related data stream(s) directly to the GGSN 1205. According to this embodiment, the GGSN 1205 may thus be the network entity which controls feedback provision of the downstream terminals receiving the service. In case the GGSN 1205 may directly determine the number of service participants based on the respective information stored in service related context information, such as the MBMS Bearer Context.

In a further embodiment of the invention, the feedback control entity, e.g. the BM-SC may receive the data of the multicast or broadcast service from a multicast or broadcast service provider (content provider 1001, 1101) as shown in Fig. 10 and 11.

The feedback control entity may be operated in a non-transparent mode for a multicast or broadcast service provider. This mode will be explained in the following with reference to Fig. 10.

In case, the BM-SC 1004 (i.e. the feedback control entity in the exemplary embodiment shown in Fig 10) acts as a client receiving the multicast or broadcast service from the viewpoint of the content provider 1001 (i.e. the multicast or broadcast service provider in the exemplary embodiment shown in Fig 10). From the terminals' 1012, 1013 viewpoints, the multicast or broadcast service, the BM-SC 1004 acts as a multicast or broadcast server providing the service.

Hence, there may be no end-to-end service session from content server 1001 to the mobile terminals 1012, 1013 but the service provision is split into two end-to-end sessions: one between the terminals 1012, 1013 and the BM-SC 1004 and one between the BM-SC 1004 and the content provider 1001.

For both sessions different protocols e.g. on the transport and the session layer may be used. For example, the session between BM-SC 1004 and the terminals 1012, 1013 may be using an RTP/UDP/IP (and RTCP feedback) while the session between content provider 1001 and BM-SC 1004 may use the same protocols or different ones. Hence, the BM-SC 1004 may operate in a gateway-like fashion providing protocol translation mechanisms.

Considering now the session between content server 1001 and BM-SC 1004, the latter may therefore provide feedback to the content provider 1001. In order to reflect the reception statistics e.g. the QoS achieved for the different service-receiving terminal 1012, 1013, the packet loss rate to the individual terminal 1012, 1013 or the like which are reflected by the feedback received from the terminal 1012, 1013, the BM-SC 1004 may analyze the feedback received and may form an aggregated or cumulative values thereof reflecting the reception statistics of the service within the mobile communication system. This aggregate or the cumulative values may be provided as feedback to the content provider 1001 in an arbitrary format. For example, the BM-SC 1004 may generate "standard" RTCP Receiver Reports reflecting the aggregated or cumulative values or a special form of feedback provision may be defined between content provider 1001 and BM-SC 1004.

A second possibility may be that the BM-SC 1004 forwards the received feedback of the individual UEs 1012, 1013 to the content provider 1001. Also in this case the BM-SC 1004 may perform some conversion of the feedback data because there is a separate connection/session between the BM-SC 1004 and the content provider 1001 where even another protocol may be used.

In any case the feedback provision from BM-SC 1004 to content provider 1001 may be especially feasible for example in case the users get charged for a received service based on the QoS achieved.

Further, in an embodiment of the invention, another identifier than the IMSI is used to identify individual UEs receiving the multicast or broadcast service. According to this embodiment, the feedback control entity may assign each UE indicating interest in a multicast or broadcast service a unique terminal identifier which is valid as long as the UE receives the service. When considering a multicast service, the messages in the joining procedure may be used to convey the terminal identifier to the respective UE.

Moreover, the feedback control entity may store the terminal identifiers in state information (e.g. a service context). Hence, when determining mobile terminals which should be instructed to provide feedback to the feedback control entity, the feedback control entity may use the assigned terminal identifiers to identify the respective terminals in the feedback control data.

Another embodiment of the present invention relates to the implementation of the above described various embodiments using hardware and software. It is recognized that the various above mentioned methods as well as the various logical blocks, modules, circuits described above may be implemented or performed using computing devices (processors), as for example general purpose processors, digital signal processors (DSP), application specific integrated circuits (ASIC), field programmable gate arrays (FPGA) or other programmable logic devices, etc. The various embodiments of the present invention may also be performed or embodied by a combination of these devices.

Further, the various embodiments of the present invention may also be implemented by means of software modules which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

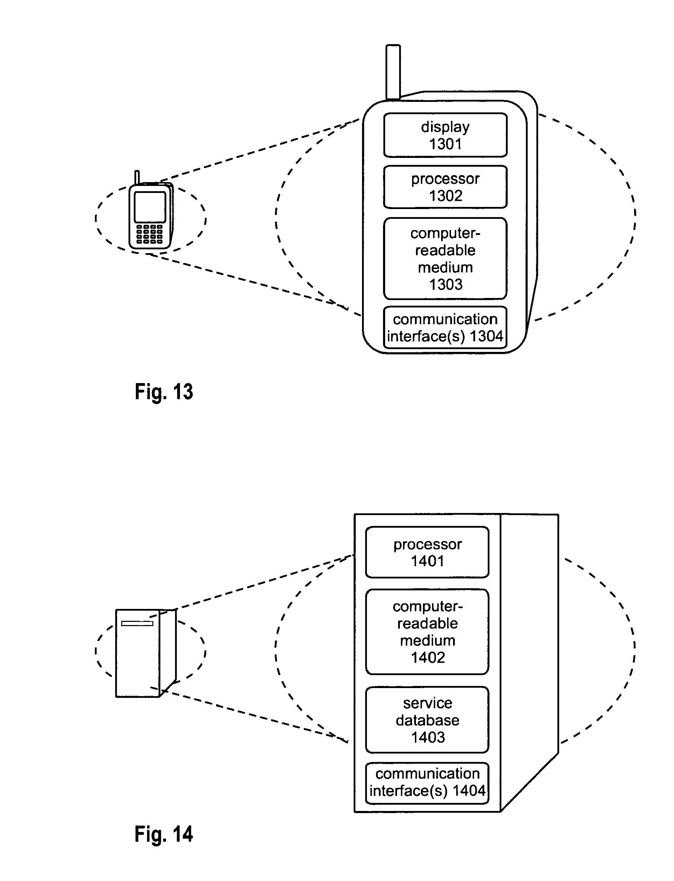

In this respect, Fig. 13 and Fig. 14 show a mobile terminal and a feedback control entity, respectively, according to exemplary embodiments of the invention.

The mobile terminal may inter alia comprise a display 1301 for displaying the data delivered from the feedback control entity as well as at least one communication interface 1304 enabling the reception of the multicast or broadcast session and the transmission of feedback. Further, the mobile terminal may comprise a processor 1302 (computing device), which may be inter alia used to execute instructions stored on the computer-readable storage medium 1303. Further, the processor 1302 may control communications via the communication interface(s) 1304 and may allow the mobile terminal to interpret and form messages received, etc.

The feedback control entity shown in Fig. 14 may comprise a processor 1401 a computer readable-storage medium 1402 and at least one communication interface 1404.

The feedback control entity may be the BM-SC of the UMTS network providing or forwarding a multicast or broadcast service. The feedback control entity may further comprise a service database 1403 storing or buffering the service data (e.g. streams) provided by the multicast or broadcast service to the users. Further, the computer-readable medium 1402 may store instructions executable by the processor 1401 and further data.

For example, the data stored in the computer-readable medium 1402 may comprise the context information of the respective service based on which the feedback control entity determine the number of service participants. The instructions stored on the computer-readable medium 1402 may further enable the feedback control entity to control feedback provision from the service participants as outlined in the various embodiments above.

**Claims**

1. A method for controlling by a feedback control entity the transmission of feedback of a plurality of mobile terminals receiving a multicast or broadcast service via an air interface of a mobile communication system, the method comprising the following steps performed by the feedback control entity:

    transmitting or forwarding data of the multicast or broadcast service via a unidirectional downlink channel and using an unreliable transport protocol to at least one mobile terminal and a session protocol, wherein the session protocol configures feedback provision of terminals receiving the multicast or broadcast service,
    determining a number of mobile terminals from said plurality of mobile terminals receiving the multicast or broadcast service for providing session protocol configured feedback to the feedback control entity,
    determining feedback control data identifying the determined number of mobile terminals,
    transmitting said feedback control data to at least said determined number of mobile terminals, and
    receiving session protocol configured feedback from said the determined number of mobile terminals at least one mobile terminal.

2. The method according to claim 1, wherein the transmitted feedback control data indicates at least one terminal identifier identifying the determined number of mobile terminals or
wherein the transmitted feedback control data indicates a range of terminal identifiers identifying the determined number of mobile terminals.

3. The method according to claim 1 or 2, wherein the transmitted feedback control data information further comprises a field indicating whether at least one terminal identifier or a range of terminal identifiers is indicated in by the feedback control data.

4. The method according to one of claims 1 to 3, wherein the feedback control data is determined based on state information of the multicast and broadcast service maintained by the feedback control entity or received from a network entity of the mobile communication system.

5. The method according to one of claims 1 to 4, wherein the feedback control data is transmitted via a multicast or broadcast data channel providing said multicast or broadcast service.

6. The method according to one of claims 1 to 4, wherein the feedback control data is transmitted via an announcement channel on which the multicast or broadcast service is announced to potential receivers.

7. The method according to claim 6, wherein a reliable communication protocol is used for data transport on the announcement channel.

8. The method according to one of claims 1 to 7, wherein determining the number of mobile terminals for providing session protocol configured feedback is based on the number of participants of the multicast or broadcast service and the available bandwidth fraction of the session for providing session protocol configured feedback.

9. The method according to claim 8, further comprising the step of obtaining the number of participants of the multicast or broadcast service from the state information maintained or received by the feedback control entity.

10. The method according to claim 9, wherein the state information of the multicast or broadcast service is comprised within the MBMS UE Context or the MBMS Bearer Context maintained at the feedback control entity.

11. The method according to claim 10, further comprising the step of receiving the state information of the multicast or broadcast service from a network entity of the mobile communication network maintaining an MBMS UE Context or an MBMS Bearer Context.

12. The method according to one of claims 1 to 11, further comprising the step of receiving the data of the multicast or broadcast service from a multicast or broadcast service provider.

13. The method according to claim 12, further comprising the step of forwarding session protocol configured feedback received at the feedback entity to the multicast or broadcast service provider.

14. The method according to claim 12 or 13, wherein the data of the multicast service is transported to the feedback control entity using a transport protocol and a session protocol, and the method further comprising the step of translating at least one of the transport protocol and a session protocol to another transport protocol or session protocol, respectively, before transmitting or forwarding the data of the multicast or broadcast service to the mobile terminals.

15. The method according to claim 13 or 14, wherein the feedback for the multicast service is transported to the feedback control entity using a transport protocol and a session protocol, and the method further comprising the step of translating at least one of the transport protocol and a session protocol to another transport protocol or session protocol, respectively, before forwarding the feedback to the multicast or broadcast service provider.

16. The method according to claim 12, further comprising the steps of forming an aggregate of the session protocol configured feedback received at the feedback control entity and
transmitting said aggregate of the session protocol configured feedback to the multicast or broadcast service provider.

17. The method according to one of claims 1 to 16, further comprising the step of starting a timer upon transmitting the feedback control data to at least said number of mobile terminals.

18. The method according to claim 17, further comprising the steps of determining whether session configured feedback has been received from said number of mobile terminals before expiry of the timer and
if the feedback control entity determines that no session configured feedback has been received from at least one of said number of mobile terminals before expiry of the timer, transmitting feedback control data to said at least one terminal instructing said at least one terminal to provide session protocol configured feedback.

19. The method according to one of claims 2 to 18, wherein the service is a multicast service and the method further comprises the steps of
assigning a terminal identifier to the mobile terminals receiving the multicast or broadcast service and
transmitting each terminal identifier to the respective mobile terminal.

20. The method according to claim 19, wherein the method further comprises storing each terminal identifier in state information of the multicast or broadcast service.

21. The method according to claim 20, further comprising the step of determining feedback control data based on said state information.

**22.** A method for controlling the transmission of feedback of mobile terminals receiving via an air interface of a mobile communication system a multicast or broadcast service transmitted or forwarded by a feedback control entity of the mobile communication system, the method comprising the following steps performed by a mobile terminal:

receiving the multicast or broadcast service via a unidirectional downlink channel and using an unreliable transport protocol and a session protocol,
wherein the session protocol configures feedback provision of terminals receiving the multicast or broadcast service,
receiving feedback control data indicating whether the mobile terminal is instructed to provide session protocol configured feedback to the feedback control entity,
in case the feedback control data indicates to provide session protocol configured feedback, establishing a bearer for providing feedback to the feedback control entity, and
transmitting session protocol configured feedback indicating reception statistics of said multicast or broadcast service to the feedback control entity via said established bearer.

**23.** The method according to claim 22, wherein the received feedback control data indicates at least one terminal identifier of a mobile terminal receiving the multicast or broadcast service which is instructed to provide feedback or wherein the received feedback control data indicates a range of terminal identifiers identifying those mobile terminals receiving the multicast or broadcast service that are instructed to provide feedback.

**24.** The method according to claim 23, wherein the received feedback control data further comprises a field indicating whether at least one terminal identifier or a range of terminal identifiers is indicated by the feedback control data.

**25.** The method according to one of claims 22 to 24, wherein the feedback control data is received via a multicast or broadcast data channel providing said multicast or broadcast service.

**26.** The method according to one of claims 22 to 24, wherein the feedback control data is received via an announcement channel on which the multicast or broadcast service is announced to potential receivers.

**27.** The method according to claim 26, wherein a reliable communication protocol is used for data transport on the announcement channel.

**28.** The method according to one of claims 22 to 26, further comprising the steps of receiving reconfiguration data from the feedback control entity, wherein the reconfiguration data indicates which mobile terminals providing session protocol configured feedback are to stop feedback provision.

**29.** The method according to claim 28, further comprising the step of tearing down the established bearer in case the mobile terminal is instructed to stop feedback provision.

**30.** The method according to one of claims 1 to 29, wherein the service is a multicast service and the method further comprises the step of receiving a terminal identifier.

**31.** The method according to claim 30, wherein the terminal identifier is received in service joining procedure of the multicast service.

**32.** The method according to claim 30 or 31, further comprising the step of determining whether the received feedback control data indicate the terminal identifier and if so, providing session protocol configured feedback.

**33.** The method according to one of claims 1 to 32, wherein the feedback control data and the multicast or broadcast service is provided within a download session according to the FLUTE protocol.

**34.** The method according to one of claims 1 to 32, wherein the multicast or broadcast service is provided using the RTP protocol and feedback is provided using the RTCP protocol, wherein a fraction of the available bandwidth for a session providing the multicast or broadcast service is allocated to the RTCP protocol messages.

**35.** The method according to claim 34, wherein the session protocol configured feedback is provided in form of receiver reports of the RTCP protocol.

36. The method according to claim 34 or 35, wherein the feedback control data further indicates the report time interval and the available bandwidth for providing session protocol configured feedback using the RTCP protocol.

37. The method according to one of claims 1 to 32 or 34 to 36, wherein the feedback control data is comprised within a sender report message of the RTCP protocol transmitted by the feedback control entity.

38. The method according to one of claims 1 to 18, 22 to 29 or 33 to 37, wherein the IMSI of a mobile terminal is used as a terminal identifier.

39. The method according to claim 38, wherein the at least one IMSI comprised feedback control data is provided in encrypted form.

40. A feedback control entity for controlling the transmission of feedback of a plurality of mobile terminals receiving a multicast or broadcast service transmitted or forwarded by a feedback control entity via an air interface of a mobile communication system, the feedback control entity comprising:

   a transmitter for transmitting or forwarding data of the multicast or broadcast service via a unidirectional downlink channel and using an unreliable transport protocol to at least one mobile terminal and a session protocol, wherein the session protocol configures feedback provision of terminals receiving the multicast or broadcast service,
   a processor for determining a number of mobile terminals from said plurality of mobile terminals receiving the multicast or broadcast service for providing protocol configured feedback to the feedback control entity, and for determining feedback control data identifying the determined number of mobile terminals,
   wherein the transmitter is adapted to transmit said feedback control data to at least said determined number of mobile terminals, and
   a receiver for receiving session protocol configured feedback from said the determined number of mobile terminals at least one mobile terminal.

41. The feedback control entity according to claim 40, further comprising means adapted to execute the steps of the method according to one of claims 1 to 21 or 33 to 39.

42. A mobile terminal receiving via an air interface of a mobile communication system a multicast or broadcast service transmitted or forwarded by a feedback control entity, the mobile terminal comprising:

   a receiver for receiving the multicast or broadcast service via a unidirectional downlink channel and using an unreliable transport protocol and a session protocol, wherein the session protocol configures feedback provision of terminals receiving the multicast or broadcast service,
   wherein the receiver is adapted to receive feedback control data indicating whether the mobile terminal is instructed to provide session protocol configured feedback to the feedback control entity,
   a processor for establishing a bearer for providing feedback to the feedback control entity in case the feedback control data indicates to provide session protocol configured feedback, and
   a transmitter for transmitting session protocol configured feedback indicating reception statistics of said multicast or broadcast service to the feedback control entity via said established bearer.

43. The mobile terminal according to claim 42, further comprising means adapted to execute the steps of the method according to one of claims 22 to 39.

44. A mobile communication system comprising a feedback control entity according to claim 40 or 41 and at least one mobile terminal according to claim 42 or 43 for receiving a multicast or broadcast service from a feedback control entity via an air interface using a unidirectional downlink channel and an unreliable transport protocol.

45. A computer-readable medium for storing instructions that, when executed by a processor of a feedback control entity, cause the processor to control the transmission of feedback of mobile terminals receiving via an air interface of a mobile communication system a multicast or broadcast service transmitted or forwarded by the feedback control entity by:

   transmitting or forwarding data of the multicast or broadcast service via a unidirectional downlink channel and using an unreliable transport protocol to at least one mobile terminal and a session protocol, wherein the session protocol configures feedback provision of terminals receiving the multicast or broadcast service,

determining a number of mobile terminals from said plurality of mobile terminals receiving the multicast or broadcast service for providing protocol configured feedback to the feedback control entity,
determining feedback control data identifying the determined number of mobile terminals,
transmitting said feedback control data to at least said determined number of mobile terminals, and
receiving session protocol configured feedback from said the determined number of mobile terminals at least one mobile terminal.

46. The computer-readable medium according to claim 45, further storing instructions that, when executed by the processor of the feedback control entity cause the processor perform the steps of the method according to one of claims 1 to 21 or 33 to 39.

47. A computer-readable medium for storing instructions that, when executed by a processor of a mobile terminal, cause the processor to control the transmission of feedback of said mobile terminal receiving via an air interface of a mobile communication system a multicast or broadcast service transmitted or forwarded by a feedback control entity by:

receiving the multicast or broadcast service via a unidirectional downlink channel and using an unreliable transport protocol and a session protocol, wherein the session protocol configures feedback provision of terminals receiving the multicast or broadcast service,
receiving feedback control data indicating whether the mobile terminal is instructed to provide session protocol configured feedback to the feedback control entity,
in case the feedback control data indicates to provide session protocol configured feedback, establishing a bearer for providing feedback to the feedback control entity, and
transmitting session protocol configured feedback indicating reception statistics of said multicast or broadcast service to the feedback control entity via said established bearer.

48. The computer-readable medium according to claim 47, further storing instructions that, when executed by the processor of the mobile terminal cause the processor to perform the steps of the method according to one of claims 22 to 39.

Fig. 1

Fig. 2

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|O|   reservd    |            IMSI                           ...
+-+-+-+-+-+-+-+-+-+-+-+-+-+-+-+-+-+-+-+-+-+-+-+-+-+-+-+-+-+-+-+-+
...                                             |   unused    |
+-+-+-+-+-+-+-+-+-+-+-+-+-+-+-+-+-+-+-+-+-+-+-+-+-+-+-+-+-+-+-+-+
```

**Fig. 3**

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|O|    count     |           IMSI 1                          ...
+-+-+-+-+-+-+-+-+-+-+-+-+-+-+-+-+-+-+-+-+-+-+-+-+-+-+-+-+-+-+-+-+
...                                             |             ...
+-+-+-+-+-+-+-+-+-+-+-+-+-+-+-+-+-+-+-+-+-+-+-+-+-+-+-+-+-+-+-+-+
                              ...
+-+-+-+-+-+-+-+-+-+-+-+-+-+-+-+-+-+-+-+-+-+-+-+-+-+-+-+-+-+-+-+-+
...                           |    IMSI n                     ...
+-+-+-+-+-+-+-+-+-+-+-+-+-+-+-+-+-+-+-+-+-+-+-+-+-+-+-+-+-+-+-+-+
...                                                           |
+-+-+-+-+-+-+-+-+-+-+-+-+-+-+-+-+-+-+-+-+-+-+-+-+-+-+-+-+-+-+-+-+
```

**Fig. 4**

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|O|   reservd    |          IMSI begin                       ...
+-+-+-+-+-+-+-+-+-+-+-+-+-+-+-+-+-+-+-+-+-+-+-+-+-+-+-+-+-+-+-+-+
...                                             |             ...
+-+-+-+-+-+-+-+-+-+-+-+-+-+-+-+-+-+-+-+-+-+-+-+-+-+-+-+-+-+-+-+-+
...                           IMSI end                       ...
+-+-+-+-+-+-+-+-+-+-+-+-+-+-+-+-+-+-+-+-+-+-+-+-+-+-+-+-+-+-+-+-+
...                           |               unused          |
+-+-+-+-+-+-+-+-+-+-+-+-+-+-+-+-+-+-+-+-+-+-+-+-+-+-+-+-+-+-+-+-+
```

**Fig. 5**

```
 0                   1                   2                   3
 0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+-+
|O| res |                 IMSI pattern                      ...
+-+-+-+-+-+-+-+-+-+-+-+-+-+-+-+-+-+-+-+-+-+-+-+-+-+-+-+-+-+-+-+-+
...                                                           |
+-+-+-+-+-+-+-+-+-+-+-+-+-+-+-+-+-+-+-+-+-+-+-+-+-+-+-+-+-+-+-+-+
```

**Fig. 6**

```
0                   1                   2                   3
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+
|O| M | cnt/res |              IMSI A                      ...
+-+-+-+-+-+-+-+-+-+-+-+-+-+-+-+-+-+-+-+-+-+-+-+-+-+-+-+-+-+-+-+
...                                              |          ...
+-+-+-+-+-+-+-+-+-+-+-+-+-+-+-+-+-+-+-+-+-+-+-+-+-+-+-+-+-+-+-+
...                            IMSI B                      ...
+-+-+-+-+-+-+-+-+-+-+-+-+-+-+-+-+-+-+-+-+-+-+-+-+-+-+-+-+-+-+-+
...                          |                             ...
+-+-+-+-+-+-+-+-+-+-+-+-+-+-+-+-+-+-+-+-+-+-+-+-+-+-+-+-+-+-+-+
```

**Fig. 7**

```
0                   1                   2                   3
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+
|V=2|P| subtype |   PT=APP=204   |            length           |
+-+-+-+-+-+-+-+-+-+-+-+-+-+-+-+-+-+-+-+-+-+-+-+-+-+-+-+-+-+-+-+
|                            SSRC/CSRC                         |
+-+-+-+-+-+-+-+-+-+-+-+-+-+-+-+-+-+-+-+-+-+-+-+-+-+-+-+-+-+-+-+
|                          name (ASCII)                        |
+-+-+-+-+-+-+-+-+-+-+-+-+-+-+-+-+-+-+-+-+-+-+-+-+-+-+-+-+-+-+-+
|                  application-dependent data              ...
+-+-+-+-+-+-+-+-+-+-+-+-+-+-+-+-+-+-+-+-+-+-+-+-+-+-+-+-+-+-+-+
```

**Fig. 8**

```
0                   1                   2                   3
0 1 2 3 4 5 6 7 8 9 0 1 2 3 4 5 6 7 8 9 0 1 2 3 4 5 6 7 8 9 0 1
+-+-+-+-+-+-+-+-+-+-+-+-+-+-+-+-+-+-+-+-+-+-+-+-+-+-+-+-+-+-+-+
|V=2|P|reserved |   PT=XR=207    |            length           |
+-+-+-+-+-+-+-+-+-+-+-+-+-+-+-+-+-+-+-+-+-+-+-+-+-+-+-+-+-+-+-+
|                            SSRC                              |
+-+-+-+-+-+-+-+-+-+-+-+-+-+-+-+-+-+-+-+-+-+-+-+-+-+-+-+-+-+-+-+
|      BT        |     rsvd      |         block length        |
+-+-+-+-+-+-+-+-+-+-+-+-+-+-+-+-+-+-+-+-+-+-+-+-+-+-+-+-+-+-+-+
|                       SSRC of source                        |
+-+-+-+-+-+-+-+-+-+-+-+-+-+-+-+-+-+-+-+-+-+-+-+-+-+-+-+-+-+-+-+
|O|M|  cnt/res  |              IMSI A                      ...
+-+-+-+-+-+-+-+-+-+-+-+-+-+-+-+-+-+-+-+-+-+-+-+-+-+-+-+-+-+-+-+
                                                 |          ...
+-+-+-+-+-+-+-+-+-+-+-+-+-+-+-+-+-+-+-+-+-+-+-+-+-+-+-+-+-+-+-+
...                            IMSI B                      ...
+-+-+-+-+-+-+-+-+-+-+-+-+-+-+-+-+-+-+-+-+-+-+-+-+-+-+-+-+-+-+-+
...                          |                             ...
+-+-+-+-+-+-+-+-+-+-+-+-+-+-+-+-+-+-+-+-+-+-+-+-+-+-+-+-+-+-+-+
```

**Fig. 9**

Fig. 10

UMTS network 1002

BM-SC 1004

GGSN 1005

CN 1003

UTRAN 1007

SGSN 1006

RNC

Node B

content server 1101

RNC 1009

Node B 1010

Node B

Node B 1011

UE 912

UE 913

Fig. 11

EP 1 631 000 A1

Fig. 12

display
1301

processor
1302

computer-
readable
medium
1303

communication
interface(s) 1304

Fig. 13

processor
1401

computer-
readable
medium
1402

service
database
1403

communication
interface(s) 1404

Fig. 14

**European Patent Office**

**EUROPEAN SEARCH REPORT**

Application Number

EP 04 02 0655

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X<br><br><br>A | WO 2004/040928 A (MEYER MICHAEL ; LOHMAR THORSTEN (DE); WAGER STEFAN (FI); HUNDSCHEIDT F) 13 May 2004 (2004-05-13)<br>* abstract *<br>* page 2, line 18 - page 5, line 15 *<br>* page 21, line 27 - page 22, line 10 *<br>* figures 3-7 * | 1-7, 12-48<br><br>8-11 | H04L12/18 |
| D,X<br><br><br><br><br><br><br><br>A | CASNER S: "Session Description Protocol (SDP) Bandwidth Modifiers for RTP Control Protocol (RTCP) Bandwidth"<br>RFC 3556, [Online] July 2003 (2003-07), pages 1-8, XP002317876<br>Retrieved from the Internet:<br>URL:http://www.watersprings.org/pub/rfc/rfc3556.txt> [retrieved on 2005-02-16]<br>* the whole document * | 1-7, 12-48<br><br><br><br><br><br><br>8-11 | |
| D,X<br><br><br><br><br><br><br><br>A | BOLOT J-C ET AL: "SCALABLE FEEDBACK CONTROL FOR MULTICAST VIDEO DISTRIBUTION IN THE INTERNET"<br>1 October 1994 (1994-10-01), COMPUTER COMMUNICATION REVIEW, ASSOCIATION FOR COMPUTING MACHINERY. NEW YORK, US, PAGE(S) 58-67 , XP000477042<br>ISSN: 0146-4833<br>* chapter 3 * | 1-7, 12-48<br><br><br><br><br><br>8-11 | TECHNICAL FIELDS SEARCHED (Int.Cl.7)<br><br>H04L<br>H04Q |
| X<br><br><br><br>A | HOFMANN ET AL: "A taxonomy of feedback for multicast"<br>IETF, 24 June 1999 (1999-06-24), pages 1-11, XP002297612<br>* chapter 3.3 * | 1-7, 12-48<br><br><br>8-11 | |

-/--

The present search report has been drawn up for all claims

| Place of search | Date of completion of the search | Examiner |
|---|---|---|
| Berlin | 16 February 2005 | Rosken, W |

EPO FORM 1503 03.82 (P04C01)

**European Patent Office**

**EUROPEAN SEARCH REPORT**

Application Number

EP 04 02 0655

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BROWN K: "The RTCP gateway: scaling real-time control bandwidth for wireless networks" COMPUTER COMMUNICATIONS, ELSEVIER SCIENCE PUBLISHERS BV, AMSTERDAM, NL, vol. 23, no. 14-15, 30 August 2000 (2000-08-30), pages 1470-1483, XP004209395 ISSN: 0140-3664 | 1-7, 12-48 | |
| A | * chapters 2-4 * | 8-11 | |
| D,X | SCHULZRINNE H ET AL: "RFC 3550 RTP: A Transport Protocol for Real-Time Applications" NETWORK WORKING GROUP REQUEST FOR COMMENTS, XX, XX, July 2003 (2003-07), pages 1-104, XP002276760 | 1-7, 12-48 | |
| A | * chapters 2,6,7 * | 8-11 | |

TECHNICAL FIELDS SEARCHED (Int.Cl.7)

The present search report has been drawn up for all claims

| Place of search | Date of completion of the search | Examiner |
|---|---|---|
| Berlin | 16 February 2005 | Rosken, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT**
**ON EUROPEAN PATENT APPLICATION NO.**                    EP 04 02 0655

16-02-2005

| Patent document cited in search report | Publication date | Patent family member(s) | Publication date |
|---|---|---|---|
| WO 2004040928 A | 13-05-2004 | WO 2004040928 A1 | 13-05-2004 |

For more details about this annex : see Official Journal of the European Patent Office, No. 12/82